# EUROPÄISCHE PATENTSCHRIFT

(11) **EP 2 888 347 B1**
(45) Veröffentlichungstag und Bekanntmachung des Hinweises auf die Patenterteilung: **10.01.2018**
(21) Anmeldenummer: 13748029.9
(22) Anmeldetag: 12.08.2013
(51) Int. Cl.: C12C 7/17

(54) **AUFHACK- UND AUSTREBERVORRICHTUNG**
RAKING AND GRAIN-REMOVING APPARATUS
DISPOSITIF DE HACHAGE ET DE SEPARATION DE LA DRÊCHE

(30) Priorität: 21.08.2012 DE 102012214851
(43) Veröffentlichungstag der Anmeldung: 01.07.2015
(73) Patentinhaber: Krones AG, 93073 Neutraubling (DE)
(72) Erfinder: GRATZER, Harald, 93073 Neutraubling (DE)
(74) Vertreter: Grünecker Patent- und Rechtsanwälte PartG mbB
(86) Internationale Anmeldenummer: PCT/EP2013/066817
(87) Internationale Veröffentlichungsnummer: WO 2014/029653

(56) Entgegenhaltungen:
- EP-A1- 0 266 782
- EP-A1- 1 325 951
- DE-A1- 1 642 766
- DE-A1- 19 539 180
- DE-C- 58 176
- US-A- 2 080 287
- US-A- 2 782 013

## Beschreibung

### Gebiet der Erfindung

Die vorliegende Erfindung betrifft eine Vorrichtung zum Durchführen eines Austrebervorgangs in einem Läuterbottich, insbesondere eine Aufhack- und Austrebervorrichtung mit daran angebrachten Leisten zum Fördern von Treber bei einem Austrebervorgang.

### Stand der Technik

Im Sudhaus wird aus stärkehaltigen Braurohstoffen, z. B. Gerste, Malz, Reis oder Mais, eine Bierwürze hergestellt, die unter Zugabe von Hefe vergoren wird. Die Braurohstoffe werden in einer Mühle zerkleinert und mit Wasser vermischt und somit eine Maische hergestellt. Zweck des Maischprozesses ist unter anderem der Stärkeabbau. In der Fest-/Flüssig-Trennung, welche meist in einem Läuterbottich oder Maischefilter stattfindet, werden die löslichen (flüssigen) Bestandteile von den unlöslichen Bestandteilen der Maische abgetrennt. Während die verbleibenden unlöslichen Bestandteile, die Treber, aus der Maische abgetrennt und anderen Verwendungszwecken z. B. als Tierfutter oder zur Energiegewinnung zugeführt werden, wird die abgetrennte flüssige Phase, die Würze, in einer Würzepfanne unter Zugabe von Hopfen gekocht.

Der Läuterbottich verfügt im Allgemeinen über eine Aufhackvorrichtung. Um den gewünschten Würzefluss im Abläuterprozess zu gewährleisten, wird mit dieser Vorrichtung die Treber gelockert (das heißt, dass das Treberbett als natürliche Filterschicht durch diesen Prozess erhalten bleibt). Nach Beendigung des Abläuterprozesses muss die Treber aus dem Läuterbottich entfernt werden, was als Austrebervorgang bezeichnet wird. Hierzu sind im Läuterbottichboden je nach Durchmesser des Läuterbottichs meist 1 bis 4 Treberausstoßklappen vorgesehen, welche beim Austrebervorgang geöffnet werden, so dass die Treber in den Treberbunker gelangt. An der Aufhackvorrichtung sind Treberscheite angebracht, die beim Austrebervorgang in Richtung Senkboden, der sich über dem eigentlichen Läuterbottichboden befindet, herabgelassen werden und beim ständigen Drehen der Aufhackvorrichtung die Treber zu den in dem Läuterbottich befindlichen Treberausstoßöffnungen zu fördern. Meist ist diese Öffnung bzw. sind diese Öffnungen als Treberausstoßklappe(n) im Läuterbottichboden ausgeführt. Eine Leiste kann am bodenseitigen Ende der Aufhackmesser der Aufhackvorrichtung verstellbar angebracht sein, die während der Austrebervorgangs in vertikaler Lage die Wirkung der Treberscheite unterstützt (siehe DE 76 09 309).

In der US 2 782 013 A wird eine Läutervorrichtung mit verstellbaren Einsätzen an Aufhackmessern beschrieben, deren Neigung gegenüber dem Tragarm, an dem die Messer befestigt sind, je nach Läuter- oder Austreberbetrieb eingestellt werden kann. In der EP 0 266 782 A1 wird ein Läuterbottich mit zur Balkenachse schräg gestellten Treberscheiten beschrieben. Ein in der DE 16 42 766 A1 beschriebener Läuterbottich weist an Tragarmen angeordnete Treberscheite auf, die in einem endlichen Winkel zur Bewegungsbahn bzw. den Tragarmen selbst angebracht sind. In der DE 58 176 C wird eine Aufhack- und Austrebermaschine beschrieben, die Schaufeln aufweist, die im Austreberbetrieb schräg gestellt werden können. In der DE 195 39 180 A1 wird ein Läuterbottich mit einer Aufhack- und Austrebereinrichtung beschrieben, die zwei Tragarme aufweist, an denen Aufhackmesser befestigt sind. In der EP 1 325 951 A1 wird ein Läuterbottich mit einer Aufhack- und Austrebereinrichtung beschrieben, die Aufhackmesser aufweist. In der in der US 2 090 287 A beschriebenen Aufhack- und Austrebereinrichtung werden Leisten an Tragarmen befestigt und zueinander in radialer Richtung versetzt sowie in einem endlichen Winkel zu den Tragarmen angeordnet.

Durch den Austrebervorgang verlängert sich die Belegungszeit im Läuterbottich während der kein neuer Sud verarbeitet (abgeläutert) werden kann. Eine Erhöhung der Anzahl der Treberausstoßklappen verringert diese Belegungszeit, verursacht jedoch Investitionskosten und verringert die aktive Läuterfläche. Durch elektrische und mechanische Grenzen kann die Umdrehungsgeschwindigkeit der Aufhackvorrichtung nicht beliebig erhöht werden. Zum Beispiel besteht das Risiko, bei Erhöhung der Umfangsgeschwindigkeit der Aufhackvorrichtung Einbauten an dieser durch erhöhte Widerstandsmomente zu zerstören.

Es liegt daher der vorliegenden Erfindung die Aufgabe zugrunde, eine Vorrichtung bereitzustellen, die es erlaubt den Austrebervorgang kostengünstig und verlässlich gegenüber dem Stand der Technik zu beschleunigen, ohne dass eine erhöhte Anzahl an Treberausstoßklappen oder anderer Einrichtung zum Treberausstoß in dem Läuterbottich bereitgestellt werden müsste.

### Beschreibung der Erfindung

Die oben genannte Aufgabe wird durch eine drehbare Aufhack- und Austrebervorrichtung für einen Läuterbottich gemäß Anspruch 1 gelöst, mit
mindestens einem ersten und einem zweiten drehbaren und heb- und senkbaren Tragarm, wobei sich der erste Tragarm ausgehend von einer zentralen Drehwelle in eine erste radiale Richtung (zur Zarge eines Läuterbottichs) erstreckt und sich der zweite Tragarm ausgehend von der zentralen Drehwelle in eine zweite radiale Richtung (zur Zarge eines Läuterbottichs) erstreckt;
einer ersten Leiste zum Fördern von Treber bei einem Austrebervorgang, die in einem ersten radialen Abstand von der zentralen Drehwelle an dem ersten Tragarm angebracht ist,
einer zweiten Leiste zum Fördern von Treber bei einem Austrebervorgang, die in einem zweiten radialen Abstand von der zentralen Drehwelle an dem zweiten Tragarm angebracht ist, wobei der zweite radiale Abstand größer als der erste radiale Abstand ist; und wobei
keine weitere Leiste an dem ersten Tragarm in einem radialen Abstand angebracht ist, der kleiner als der zweite radiale Abstand ist, und keine weitere Leiste an dem zweiten Tragarm in einem radialen Abstand angebracht ist, der kleiner als der zweite radiale Abstand ist. Es werden also an verschiedenen Tragarmen Leisten radial gegeneinander versetzt vorgesehen.

Weiterhin weist die drehbare Aufhack- und Austrebervorrichtung für einen Läuterbottich noch einen dritten Tragarm und eine dritte Leiste zum Fördern von Treber bei einem Austrebervorgang, die an dem dritten Tragarm angebracht ist, und eine vierte Leiste zum Fördern von Treber bei einem Austrebervorgang, die an dem ersten oder zweiten Tragarm der Aufhack- und Austrebervorrichtung angebracht ist, auf, wobei die dritte Leiste einen geringeren radialen Abstand von der zentralen Drehwelle aufweist als die vierte Leiste und einen größeren radialen Abstand von der zentralen Drehwelle aufweist als die zweite Leiste. Es versteht sich, dass eine beliebige Anzahl an Leisten versetzt zueinander vorgesehen sein kann, so dass eine letzte Leiste einen größeren radialen Abstand von der Drehwelle als eine vorletzte Leiste und diese einen größeren radialen Abstand von der Drehwelle als eine vorvorletzte Leiste aufweist.

Mehrere Leisten zum Fördern von Treber bei einem Austrebervorgang sind in der radialen Richtung voneinander beabstandet an dem Tragarm bzw. den Tragarmen befestigt, und zumindest eine der mehreren Leisten ist nicht in radialer Richtung ausgerichtet, d.h., in Draufsicht entlang der Drehachse des drehbaren Tragarms bzw. der drehbaren Tragarme ergibt sich ein endlicher horizontaler, sich nach außen hin öffnender Winkel zwischen der zumindest einen Leiste und dem Tragarm, so dass eine Förderung der Treber nach außen hin, zur Wand eines Läuterbottichs, in dem die Vorrichtung Verwendung findet, wo eine oder mehrere Treberausstoßklappen im Läuterbottichboden vorgesehen sind, ermöglicht wird.

Wenn im weiteren von Treberausstoßklappen die Rede ist, so sind darunter auch andere Einrichtungen zu verstehen, welche die Aufgabe des Entfernens der Treber (des Austreberns) erfüllen. Die zumindest eine Leiste kann in einem horizontalen Winkel (der Winkel liegt in einer Ebene, die im wesentlich parallel zum Läuterbottichboden einer Läuterbottichs, in dem die Vorrichtung Verwendung findet, liegt) zu dem Tragarm angebracht sein, der zwischen 10° und 40° liegt und sich nach außen hin öffnet. Während eines Austrebervorgangs läuft die derart befestigte Leiste dem Trägerarm, an dem sie befestigt ist, beispielsweise nach.

Die Leisten können auch so einstellbar sein, dass sie in einem Aufhackvorgang das Aufhacken der Treber unterstützen.

Während es im Stand der Technik bekannt ist, Leisten mit einem endlichen Winkel gegenüber der Oberfläche der zu entsorgenden Treber (bzw. dem Läuterbottichboden) bereitzustellen, ist erfindungsgemäß ein endlicher horizontaler Winkel zwischen einer Längsachse einer Leiste (entlang der Breite der Leisten) und dem Tragarm vorgesehen, der von einem Winkel gegenüber der Oberfläche der zu entsorgenden Treber unabhängig ist. Durch eine solche beanspruchte nicht radiale Ausrichtung von Leisten wird die Treber während der Umdrehung der Aufhack- und Austrebervorrichtung effektiv nach außen gefördert. Innerhalb einer vollständigen Umdrehung arbeitet mehr als eine Leiste an der Förderung des Treberkuchens nach außen (von der Drehwelle der Aufhack- und Austrebervorrichtung aus gesehen).

Es ergibt sich durch die nicht radiale Orientierung einer oder mehrerer Leisten ein Pflugschareffekt, durch den effektiv Treber nach außen gefördert wird. In einer Umdrehung der beanspruchten Aufhack- und Austrebervorrichtung wird mehr Treber nach außen gefördert, als es im Stand der Technik möglich war.

Durch das radiale Versetzen der Leisten gegeneinander, wird bewirkt, dass innerhalb einer Umdrehung der Aufhack- und Austrebervorrichtung während eines Austrebervorgangs Treber sukzessive von innen nach außen, d.h., zu den hin Treberausstoßklappen, die sich am Rand eines Läuterbottichbodens befinden, gefördert wird.

In diesen Beispielen kann eine oder es können mehrere Leisten nicht in der radialen Richtung des Tragarms, an dem sie angebracht ist/sind, ausgerichtet sein. Die nicht radial ausgerichteten Leisten können insbesondere in einem horizontalen Winkel (in einer Ebene parallel zum Läuterbottichboden) zu dem Tragarm angebracht sein, der zwischen 10° und 40° liegt und sich nach außen hin (zur Zarge des Läuterbottichs hin) öffnet. Durch eine Kombination des radialen Versatzes der Leisten und den Öffnungswinkel von 10° bis 40° wird eine besonders effektive Förderung der Treber nach außen hin erreicht. Treber wird spiralförmig nach außen gefördert.

Allgemein kann in den oben beschriebenen Beispielen die drehbare Aufhack- und Austrebervorrichtung Tragarme aufweisen, insbesondere vier Tragarme, wobei an drei der vier Tragarme zumindest eine Leiste angebracht ist, wobei die Leisten derartig voneinander beabstandet und gegenüber den jeweiligen Tragarmen, an denen sie angebracht sind, ausgerichtet sind, dass Treber bei der Umdrehung der Aufhack- und Austrebervorrichtung in einem Austrebervorgang in einer Projektion entlang der Längsachse der zentralen Drehwelle spiralförmig nach außen gefördert wird. Allgemein kann die Aufhack- und Austrebervorrichtung eine beliebige Anzahl an Tragarmen aufweisen, an denen Leisten angebracht sind, die derartig voneinander beabstandet und gegenüber den jeweiligen Tragarmen, an denen sie angebracht sind, ausgerichtet sind, dass Treber bei der Umdrehung der Aufhack- und Austrebervorrichtung in einem Austrebervorgang in einer Projektion entlang der Längsachse der zentralen Drehwelle spiralförmig nach außen gefördert wird.

Gemäß einer Weiterbildung umfasst die Aufhack- und Austrebervorrichtung der oben beschriebenen Arten Aufhackmesser an jedem der Tragarme. Je eine der Leisten kann an einem unteren Ende eines der Aufhackmesser angebracht sein.

Gemäß einer Weiterbildung der Aufhack- und Austrebervorrichtung der oben beschriebenen Arten sind zumindest einige der Leisten während eines Aufhackvorgangs bei Umdrehung der Aufhack- und Austrebervorrichtung in eine erste Drehrichtung in eine gegenüber der Oberfläche einer Läuterbottichbodens schräge Position und während eines Austrebervorgangs bei Umdrehung der Aufhack- und Austrebervorrichtung in eine zweite Drehrichtung, die der ersten Drehrichtung entgegengesetzt ist, in eine gegenüber der Oberfläche einer Läuterbottichbodens senkrechte Position einstellbar. So können die Leisten sowohl den Aufhackvorgang als auch den Austrebervorgang unterstützen. Prinzipiell können auch zumindest einige der Leisten (4a-4f) während eines Aufhackvorgangs bei Umdrehung der Aufhack- und Austrebervorrichtung in eine Drehrichtung in eine gegenüber der Oberfläche einer Läuterbottichbodens schräge Position und während eines Austrebervorgangs bei Umdrehung der Aufhack- und Austrebervorrichtung in die Drehrichtung in eine gegenüber der Oberfläche einer Läuterbottichbodens senkrechte Position einstellbar sein.

Jede der oben beschriebenen beispielhaften Vorrichtungen kann Treberscheite an zumindest einem der Tragarme umfassen, die derart gegenüber dem zumindest einen Tragarm geneigt sind, dass sie während eines Austrebervorgangs bei Umdrehung der Aufhack- und Austrebervorrichtung Treber radial nach außen fördern.

Weiterhin können in den oben beschriebenen Beispielen zumindest einige der radial gegeneinander versetzten Leisten in einem radialen Abstand voneinander beabstandet sein, der zwischen 50% und 120%, insbesondere zwischen 80% und 100%, der Breite der Leisten (Schaufelbreite) liegt.

Es wird weiterhin ein Läuterbottich bereitgestellt, der eine der oben beschriebenen beispielhaften Vorrichtungen umfasst.

Im folgenden werden Ausführungsformen einer erfindungsgemäßen Vorrichtung unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht ein Beispiel für eine Aufhack- und Austrebervorrichtung bzw. für einen Läuterbottich mit einer solche Aufhack- und Austrebervorrichtung gemäß der vorliegenden Erfindung.
Figuren 2a und 2b zeigen eine an einem Tragarm einer Aufhack- und Austrebervorrichtung angebrachte Leiste zum Fördern der Treber beim Austrebervorgang.

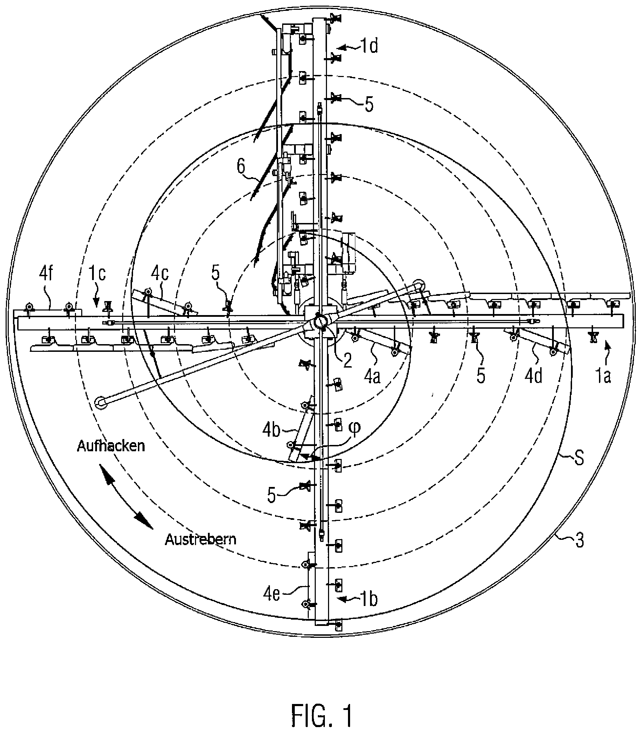

In Figur 1 ist eine Draufsicht auf eine drehbare Aufhack- und Austrebervorrichtung gezeigt. Die Aufhack- und Austrebervorrichtung umfasst vier Tragarme 1a, 1b, 1c und 1d, die sich radial von einer zentralen Drehwelle 2 Richtung Zarge 3 eines Läuterbottichs erstrecken. Im Grund der Draufsicht befindet sich der Boden des Läuterbottichs bzw. die Treber. An den Tragarmen 1a, 1b und 1c sind Leisten 4a bis 4f angebracht. Die äußersten Leisten 4e und 4f sind ohne Winkel parallel an den Tragarmen 1b bzw. 1c angebracht (also radial ausgerichtet). Die inneren Leisten 4a bis 4d sind unter einem Winkel ϕ (Winkel zwischen Längsachse des Tragarms und Längsachse entlang der Breite der Leiste in der in Figur 1 gezeigten Ebene; die Ebene, in der der Winkel definiert ist, liegt parallel zum Läuterbottichboden) an den Tragarmen 1a bis 1c angebracht (also nicht radial ausgerichtet), so dass sie während eines Austrebervorgangs (Drehung der Aufhack- und Austrebervorrichtung entgegen der Uhrzeigerrichtung) Treber nach außen befördern, wo sich eine oder mehrere Treberausstoßklappen (nicht gezeigt) im Boden des Läuterbottichs befinden. Die Treberausstoßklappen sind während des Austrebervorgangs geöffnet und während eines Aufhackvorgangs geschlossen.

In dem gezeigten Beispiel laufen die Leisten während des Austrebervorgangs dem Tragarm, an dem sie angebracht sind, nach, und die inneren Leisten 4a bis 4d sind mit einem sich nach außen hin öffnenden Winkel ϕ (beispielsweise zwischen 10° und 40°) an den Tragarmen 1a, 1b bzw. 1c angebracht.

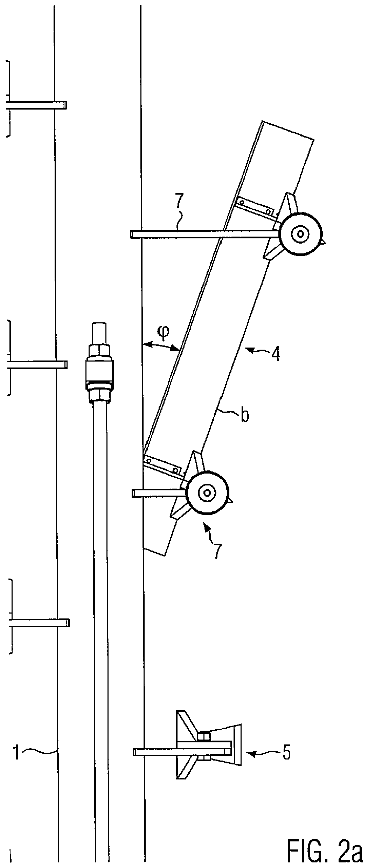

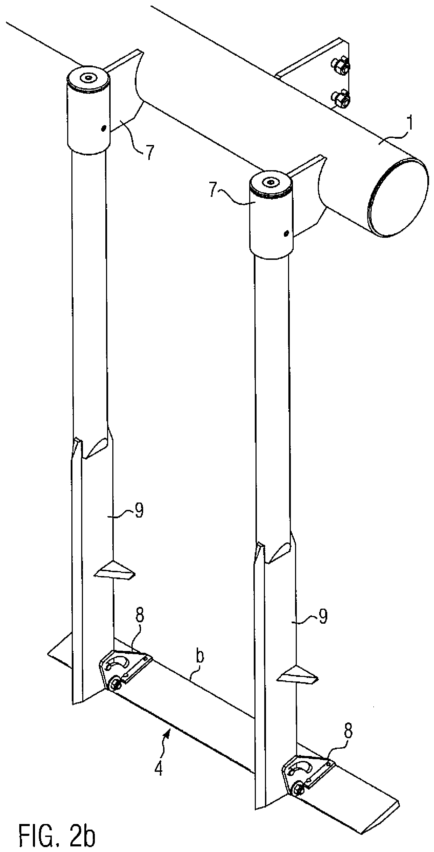

Die Befestigung der Leisten 4a bis 4d an den Tragarmen 1a, 1b bzw. 1c ist genauer in den Figuren 2a und 2b gezeigt. Die Leiste 4 wird mit geeigneten Befestigungsmitteln 7 mit einem (nach außen geöffneten) Winkel ϕ an dem Tragarm 1 befestigt. In dem in Figur 2a gezeigten Beispiel bildet die Längsachse der Leiste 4 entlang der Breite b derselben und die Längsachse des Tragarms 1 einen Winkel ϕ von 20°. Im Allgemeinen sind beispielsweise Winkel ϕ zwischen 10° und 40° geeignet. In dem in Figur 2b gezeigten Beispiel ist die Leiste 4 mithilfe zweier Haltewinkel 8 angelenkt. In dem in Figur 2b gezeigten Beispiel ist die Leiste 4 am unteren Ende eines Aufhackmessers 9 befestigt. Während eines Aufhackvorgangs (Drehung des Tragarms in Uhrzeigerrichtung) wird die Leiste 4 in Schräglage gegenüber der Oberfläche der Treber geschwenkt und unterstützt so die Auflockerung des Treberkuchens. Der (vertikale) Winkel der schräggestellten Leiste kann beispielsweise etwa 30° gegenüber dem Läuterbottichboden betragen. Während eines Austrebervorgangs (Drehung des Tragarms entgegen der Uhrzeigerrichtung) wird die Leiste in vertikale Lage gegenüber der Oberfläche der Treber geschwenkt und unterstützt so die Förderung der Treber (siehe auch DE 76 09 309).

Die Leiste 4b ist zu der Leiste 4a und die Leiste 4c zu der Leiste 4b und die Leiste 4d zu der Leiste 4c und die Leiste 4e zu der Leiste 4d jeweils um ungefähr eine Schaufelbreite b radial versetzt (siehe Figur 1). Wie bereits erwähnt, können während des Aufhackvorgangs die Leisten 4a bis 4d durch entsprechende Schrägstellung gegenüber der Treberoberfläche das Lockern der Treber unterstützen Der Aufhackvorgang wird jedoch im wesentlichen mithilfe von an den Tragarmen 1a bis 1d befestigen Aufhackmessern 5 ausgeführt. Wenn es auch in Figur 1 anders dargestellt ist, so können die Leisten 4a bis 4f verstellbar an den Aufhackmessern befestigt sein, wie es in Figur 2b gezeigt ist.

An dem Tragarm 1d sind Austreberscheite befestigt, mithilfe derer Treber im Austrebervorgang nach außen und zu den Treberausstoßklappen (nicht dargestellt) hin gefördert wird. Die Arbeit der Austreberscheite 6 wird durch die Leisten 4a bis 4f unterstützt. Dadurch dass die inneren Leisten 4a bis 4d unter einem Winkel ϕ an den Tragarmen 1a bis 1c angebracht sind, wird ein Pflugschareffekt (nach außen) bei Wirkung der Leisten 4a bis 4d auf die Treber erzielt, so dass die auszutreibende Treber nach außen gefördert wird.

Durch die radiale Versetzung der Leisten 4a bis 4e zueinander wird eine Förderung von großen Teilen des zu fördernden Trebers auf einer Spiralbahn S von Innen nach Außen erreicht. Hierdurch wird pro Umlauf der Aufhack- und Austrebervorrichtung die Menge geförderten Trebers signifikant gegenüber dem Stand der Technik erhöht. In einem ansonsten konventionellen Läuterbottich kann bei Verwendung einer einzigen Treberausstoßklappe eine Nasstrebermenge von etwa 10.155 kg (basierend auf 80% Feuchtigkeit und einem Malzeinsatz von 8.038 kg) in einer Austreberzeit von etwa 10 - 12 Minuten aus den Läuterbottich gefördert werden.

## Patentansprüche

1. Drehbare Aufhack- und Austrebervorrichtung für einen Läuterbottich, mit
mindestens einem ersten (1a) und einem zweiten (1b) drehbaren Tragarm, wobei sich der erste Tragarm (1a) ausgehend von einer zentralen Drehwelle (2) in eine erste radiale Richtung erstreckt und sich der zweite Tragarm (1b) ausgehend von der zentralen Drehwelle (2) in eine zweite radiale Richtung erstreckt;
einer ersten Leiste (4a) zum Fördern von Treber bei einem Austrebervorgang, die in einem ersten radialen Abstand von der zentralen Drehwelle (2) an dem ersten Tragarm (1a) angebracht ist,
einer zweiten Leiste (4b) zum Fördern von Treber bei einem Austrebervorgang, die in einem zweiten radialen Abstand von der zentralen Drehwelle (2) an dem zweiten Tragarm (1b) angebracht ist, wobei der zweite radiale Abstand größer als der erste radiale Abstand ist; und wobei
keine weitere Leiste an dem ersten Tragarm in einem radialen Abstand angebracht ist, der kleiner als der zweite radiale Abstand ist, und keine weitere Leiste an dem zweiten Tragarm in einem radialen Abstand angebracht ist, der kleiner als der zweite radiale Abstand ist.
einem dritten Tragarm (1c);
einer dritten Leiste (4c) zum Fördern von Treber bei einem Austrebervorgang, die an dem ersten Tragarm oder einem dritten Tragarm (1c) angebracht ist,
einer vierten Leiste (4d) zum Fördern von Treber bei einem Austrebervorgang, die an dem ersten Tragarm (1a) oder dem zweiten Tragarm (1b) angebracht ist,
und wobei
die dritte Leiste (4c) einen geringeren radialen Abstand von der zentralen Drehwelle (2) aufweist als die vierte Leiste (4d) und einen größeren radialen Abstand von der zentralen Drehwelle (2) aufweist als die zweite Leiste (4b).

2. Drehbare Aufhack- und Austrebervorrichtung für einen Läuterbottich gemäß Anspruch 1, in der zumindest eine der Leisten nicht in der radialen Richtung des Tragarms (1a, 1b, 1c), an dem sie angebracht ist, ausgerichtet ist.

3. Drehbare Aufhack- und Austrebervorrichtung für einen Läuterbottich gemäß Anspruch 2, in der die zumindest eine der Leisten (4a-4d) in einem horizontalen Winkel (ϕ) zu dem Tragarm (1a, 1b, 1c) angebracht ist, der zwischen 10° und 40° liegt und sich nach außen hin öffnet.

4. Drehbare Aufhack- und Austrebervorrichtung für einen Läuterbottich gemäß einem der vorhergehenden Ansprüche, die vier Tragarme (1a, 1b, 1c, 1d) aufweist, wobei an drei (1a, 1b, 1c) der vier Tragarme (1a, 1b, 1c, 1d) zumindest eine Leiste (4a-4d) angebracht ist, wobei die Leisten (4a-4d) derartig radial voneinander beabstandet und gegenüber den jeweiligen Tragarmen (1a, 1b, 1c), an denen sie angebracht sind, ausgerichtet sind, dass Treber bei der Umdrehung der Aufhack- und Austrebervorrichtung in einem Austrebervorgang in einer Projektion entlang der Längsachse der zentralen Drehwelle (2) spiralförmig nach außen gefördert wird.

5. Drehbare Aufhack- und Austrebervorrichtung für einen Läuterbottich gemäß einem der vorhergehenden Ansprüche, die weiterhin Aufhackmesser (5) an jedem der Tragarme (1a, 1b, 1c, 1d) aufweist.

6. Drehbare Aufhack- und Austrebervorrichtung für einen Läuterbottich gemäß Anspruch 5, in der je eine der Leisten (4a-4f) an einem unteren Ende eines der Aufhackmesser (5) angebracht ist.

7. Drehbare Aufhack- und Austrebervorrichtung für einen Läuterbottich gemäß einem der vorhergehenden Ansprüche, in der zumindest einige der Leisten (4a-4f) während eines Aufhackvorgangs bei Umdrehung der Aufhack- und Austrebervorrichtung in eine erste Drehrichtung in eine gegenüber der Oberfläche einer Läuterbottichbodens schräge Position und während eines Austrebervorgangs bei Umdrehung der Aufhack- und Austrebervorrichtung in eine zweite Drehrichtung, die der ersten Drehrichtung entgegengesetzt ist, in eine gegenüber der Oberfläche einer Läuterbottichbodens senkrechte Position einstellbar ist.

8. Drehbare Aufhack- und Austrebervorrichtung für einen Läuterbottich gemäß einem der Ansprüche 1 bis 6, in der zumindest einige der Leisten (4a-4f) während eines Aufhackvorgangs bei Umdrehung der Aufhack- und Austrebervorrichtung in eine Drehrichtung in eine gegenüber der Oberfläche einer Läuterbottichbodens schräge Position und während eines Austrebervorgangs bei Umdrehung der Aufhack- und Austrebervorrichtung in die Drehrichtung in eine gegenüber der Oberfläche einer Läuterbottichbodens senkrechte Position einstellbar ist.

9. Drehbare Aufhack- und Austrebervorrichtung für einen Läuterbottich gemäß einem der vorhergehenden Ansprüche, in der zumindest einer der Tragarme heb- und senkbar ist.

10. Drehbare Aufhack- und Austrebervorrichtung für einen Läuterbottich gemäß einem der vorhergehenden Ansprüche, in der zumindest eine der Leisten oder sämtliche der Leisten während eines Austrebervorgangs dem Träger, an dem sie befestigt ist bzw. befestigt sind, nachläuft bzw. nachlaufen.

11. Drehbare Aufhack- und Austrebervorrichtung für einen Läuterbottich gemäß einem der vorhergehenden Ansprüche, die weiterhin Treberscheite (6) an zumindest einem (1d) der Tragarme (1a, 1b, 1c, 1d) umfasst, die derart gegenüber dem zumindest einen Tragarm (1d) geneigt sind, dass sie während eines Austrebervorgangs bei Umdrehung der Aufhack- und Austrebervorrichtung Treber radial nach außen fördern.

12. Drehbare Aufhack- und Austrebervorrichtung für einen Läuterbottich gemäß einem der vorhergehenden Ansprüche, in der Leisten (4a-4d) in einem radialen Abstand voneinander beabstandet sind, der zwischen 50% und 120%, insbesondere zwischen 80% und 100%, der Breite der Leisten (4a-4d) liegt.

13. Läuterbottich mit der drehbaren Aufhack- und Austrebervorrichtung gemäß einem der vorhergehenden Ansprüche.

## Claims

1. Rotatable raking and grain-removing apparatus for a lauter tun, comprising
at least a first (1a) and a second (1b) rotatable support arm, wherein the first support arm (1a) extends starting from a central rotary shaft (2) into a first radial direction and the second support arm (1b) extends starting from the central rotary shaft (2) into a second radial direction;
a first bar (4a) for conveying spent grains in a grain-removing process, which is mounted on the first support arm (1a) at a first radial distance from the central rotary shaft (2),
a second bar (4b) for conveying spent grains in a grain-removing process, which is mounted on the second support arm (1b) at a second radial distance from the central rotary shaft (2), wherein the second radial distance is greater than the first radial distance, and wherein
no further bar is mounted on the first support arm at a radial distance smaller than the second radial distance, and no further bar is mounted on the second support arm at a radial distance smaller than the second radial distance;
a third support arm (1c);
a third bar (4c) for conveying spent grains in a grain-removing process, which is mounted on the first support arm or a third support arm (1c);
a fourth bar (4d) for conveying spent grains in a grain-removing process, which is mounted on the first support arm (1a) or the second support arm (1b),
and wherein
the third bar (4c) has a smaller radial distance from the central rotary shaft (2) than the fourth bar (4d) and a greater radial distance from the central rotary shaft (2) than the second bar (4b).

2. Rotatable raking and grain-removing apparatus for a lauter tun according to claim 1, in which at least one of the bars is not oriented in the radial direction of the support arm (1a, 1b, 1c) on which it is mounted.

3. Rotatable raking and grain-removing apparatus for a lauter tun according to claim 2, in which the at least one of the bars (4a-4b) is mounted at a horizontal angle (ϕ) to the support arm (1a, 1b, 1c) which is between 10° and 40° and opens outwards.

4. Rotatable raking and grain-removing apparatus for a lauter tun according to any one of the preceding claims, which comprises four support arms (1a, 1b, 1c, 1d), wherein at least one bar (4a-4d) is mounted on three (1a, 1b, 1c) of the four support arms (1a, 1b, 1c, 1d), wherein the bars (4a-4d) are radially spaced apart from each other and are oriented relative to the respective support arms (1a, 1b, 1c) on which they are mounted, in such a manner that spent grains are conveyed outwards in a spiral upon rotation of the raking and grain-removing apparatus in a grain-removing process in a projection along the longitudinal axis of the central rotary shaft (2).

5. Rotatable raking and grain-removing apparatus for a lauter tun according to any one of the preceding claims, which further comprises raking knives (5) on each of the support arms (1a, 1b, 1c, 1d).

6. Rotatable raking and grain-removing apparatus for a lauter tun according to claim 5, in which each one of the bars (4a-4f) is mounted on a lower end of one of the raking knives (5).

7. Rotatable raking and grain-removing apparatus for a lauter tun according to any one of the preceding claims, in which at least some of the bars (4a-4f) are adjustable during a raking process upon rotation of the raking and grain-removing apparatus into a first rotational direction into a position inclined relative to the surface of a lauter tun bottom and during a grain-removing process upon rotation of the raking and grain-removing apparatus into a second rotational direction, which is opposite the first rotational direction, into a position perpendicular to the surface of a lauter tun bottom.

8. Rotatable raking and grain-removing apparatus for a lauter tun according to any one of claims 1 to 6, in which at least some of the bars (4a-4f) are adjustable during a raking process upon rotation of the raking and grain-removing apparatus into a rotational direction into a position inclined relative to the surface of a lauter tun bottom and during a raking process upon rotation of the raking and grain-removing apparatus into the rotational direction into a position perpendicular to the surface of a lauter tun bottom.

9. Rotatable raking and grain-removing apparatus for a lauter tun according to any one of the preceding claims, in which at least one of the support arms is liftable and lowerable.

10. Rotatable raking and grain-removing apparatus for a lauter tun according to any one of the preceding claims, in which at least one of the bars or all of the bars follow(s), during a grain-removing process, the support to which it (they) is (are) fastened.

11. Rotatable raking and grain-removing apparatus for a lauter tun according to any one of the preceding claims, which further comprises spent grains removal blades (6) on at least one (1d) of the support arms (1a, 1b, 1c, 1d), which are inclined relative to the at least one support arm (1d) such that they convey spent grains radially outwards during a grain-removing process upon rotation of the raking and grain-removing apparatus.

12. Rotatable raking and grain-removing apparatus for a lauter tun according to any one of the preceding claims, in which bars (4a-4d) are spaced apart from each other at a radial distance which is between 50% and 120%, particularly between 80° and 100%, of the width of the bars (4a-4d).

13. Lauter tun with the rotatable raking and grain-removing apparatus according to any one of the preceding claims.

## Revendications

1. Dispositif rotatif de hachage et de séparation de la drêche pour une cuve de clarification, avec
au moins un premier (1a) et un deuxième (1b) bras porteurs tournants, dans lequel le premier bras porteur (1a) s'étend depuis un arbre rotatif central (2) dans une première direction radiale et le deuxième bras porteur (1b) s'étend depuis l'arbre rotatif central (2) dans une deuxième direction radiale;
une première lame (4a) pour le transport de drêche lors d'une opération de séparation de la drêche, qui est montée à une première distance radiale de l'arbre rotatif central (2) sur le premier bras porteur (1a),
une deuxième lame (4b) pour le transport de drêche lors d'une opération de séparation de la drêche, qui est montée à une deuxième distance radiale de l'arbre rotatif central (2) sur le deuxième bras porteur (1b), la deuxième distance radiale étant plus grande que la première distance radiale;
et dans lequel
aucune autre lame n'est montée sur le premier bras porteur à une distance radiale, qui est plus petite que la deuxième distance radiale, et aucune autre lame n'est montée sur le deuxième bras porteur à une distance radiale, qui est plus petite que la deuxième distance radiale,
un troisième bras porteur (1c);
une troisième lame (4c) pour le transport de drêche lors d'une opération de séparation de la drêche, qui est montée sur le premier bras porteur ou sur un troisième bras porteur (1c),
une quatrième lame (4d) pour le transport de drêche lors d'une opération de séparation de la drêche, qui est montée sur le premier bras porteur (1a) ou sur le deuxième bras porteur (1b),
et dans lequel
la troisième lame (4c) présente une plus petite distance radiale de l'arbre rotatif central (2) que la quatrième lame (4d) et une plus grande distance radiale de l'arbre rotatif central (2) que la deuxième lame (4b).

2. Dispositif rotatif de hachage et de séparation de la drêche pour une cuve de clarification selon la revendication 1, dans lequel au moins une des lames n'est pas orientée dans la direction radiale du bras porteur (1a, 1b, 1c) sur lequel elle est montée.

3. Dispositif rotatif de hachage et de séparation de la drêche pour une cuve de clarification selon la revendication 2, dans lequel au moins une des lames (4a-4d) est montée avec un angle horizontal (ϕ) par rapport au bras porteur (1a, 1b, 1c), qui se situe entre 10° et 40° et qui s'ouvre vers l'extérieur.

4. Dispositif rotatif de hachage et de séparation de la drêche pour une cuve de clarification selon l'une quelconque des revendications précédentes, qui présente quatre bras porteurs (1a, 1b, 1c, 1d), dans lequel au moins une lame (4a-4d) est montée sur trois (1a, 1b, 1c) des quatre bras porteurs (1a, 1b, 1c, 1d), dans lequel les lames (4a-4d) sont radialement espacées l'une de l'autre et orientées par rapport aux bras porteurs respectifs (1a, 1b, 1c), sur lesquels elles sont montées, de telle manière que la drêche soit transportée en spirale vers l'extérieur, dans une projection suivant l'axe longitudinal de l'arbre rotatif central (2), lors de la rotation du dispositif de hachage et de séparation de la drêche dans une opération de séparation de la drêche.

5. Dispositif rotatif de hachage et de séparation de la drêche pour une cuve de clarification selon l'une quelconque des revendications précédentes, qui présente en outre des couteaux de hachage (5) sur chacun des bras porteurs (1a, 1b, 1c, 1d).

6. Dispositif rotatif de hachage et de séparation de la drêche pour une cuve de clarification selon la revendication 5, dans lequel une des lames (4a-4f) est chaque fois montée à une extrémité inférieure d'un des couteaux de hachage (5).

7. Dispositif rotatif de hachage et de séparation de la drêche pour une cuve de clarification selon l'une quelconque des revendications précédentes, dans lequel au moins certaines des lames (4a-4f) peuvent être réglées dans une position oblique par rapport à la surface d'un fond de la cuve de clarification pendant une opération de hachage lors de la rotation du dispositif de hachage et de séparation de la drêche dans un premier sens de rotation et peuvent être réglées dans une position perpendiculaire par rapport à la surface d'un fond de la cuve de clarification pendant une opération de séparation de la drêche lors de la rotation du dispositif de hachage et de séparation de la drêche dans un deuxième sens de rotation, qui est opposé au premier sens de rotation.

8. Dispositif rotatif de hachage et de séparation de la drêche pour une cuve de clarification selon l'une quelconque des revendications 1 à 6, dans lequel au moins certaines des lames (4a-4f) peuvent être réglées dans une position oblique par rapport à la surface d'un fond de la cuve de clarification pendant une opération de hachage lors de la rotation du dispositif de hachage et de séparation de la drêche dans un sens de rotation et peuvent être réglées dans une position perpendiculaire par rapport à la surface d'un fond de la cuve de clarification pendant une opération de séparation de la drêche lors de la rotation du dispositif de hachage et de séparation de la drêche dans le sens de rotation.

9. Dispositif rotatif de hachage et de séparation de la drêche pour une cuve de clarification selon l'une quelconque des revendications précédentes, dans lequel au moins un des bras porteurs peut être relevé et abaissé.

10. Dispositif rotatif de hachage et de séparation de la drêche pour une cuve de clarification selon l'une quelconque des revendications précédentes, dans lequel au moins une des lames ou toutes les lames suit ou suivent le support auquel elle(s) est/sont fixée(s) pendant une opération de séparation de la drêche.

11. Dispositif rotatif de hachage et de séparation de la drêche pour une cuve de clarification selon l'une quelconque des revendications précédentes, qui comprend en outre des déflecteurs de drêche (6) sur au moins un des bras porteurs (1a, 1b, 1c, 1d), qui sont inclinés par rapport audit au moins un bras porteur (1d) de telle manière qu'ils transportent la drêche radialement vers l'extérieur pendant une opération de séparation de la drêche lors de la rotation du dispositif de hachage et de séparation de la drêche.

12. Dispositif rotatif de hachage et de séparation de la drêche pour une cuve de clarification selon l'une quelconque des revendications précédentes, dans lequel des lames (4a-4f) sont espacées l'une de l'autre d'une distance radiale, qui se situe entre 50 % et 120 %, en particulier entre 80 % et 100 %, de la largeur des lames (4a-4d).

13. Cuve de clarification avec un dispositif rotatif de hachage et de séparation de la drêche selon l'une quelconque des revendications précédentes.
